# EUROPÄISCHE PATENTSCHRIFT

(11) **EP 1 194 433 B1**
(45) Veröffentlichungstag und Bekanntmachung des Hinweises auf die Patenterteilung: **03.09.2003**
(21) Anmeldenummer: 00949179.6
(22) Anmeldetag: 13.06.2000
(51) Int. Cl.: C07F 7/00

(54) **ALKOXYSILANGRUPPEN AUFWEISENDE PIPERAZINONDERIVATE**
PIPERAZINONE DERIVATIVES WITH ALKOXYSILANE GROUPS
DERIVES DE PIPERAZINONE PRESENTANT DES GROUPES D'ALCOXYSILANE

(30) Priorität: 25.06.1999 DE 19929029; 25.06.1999 DE 19929011
(43) Veröffentlichungstag der Anmeldung: 10.04.2002
(73) Patentinhaber: Bayer Aktiengesellschaft, 51368 Leverkusen (DE)
(72) Erfinder: WALTER, Ulrich, verstorben (DE); SCHMALSTIEG, Lutz, D-50676 Köln (DE); LEMMERZ, Ralf, D-51375 Leverkusen (DE); WILMES, Oswald, D-51061 Köln (DE)
(86) Internationale Anmeldenummer: EP0005414
(87) Internationale Veröffentlichungsnummer: WO01000632

(56) Entgegenhaltungen:
- DE-B- 1 135 472
- US-A- 4 623 740
- CHEMICAL ABSTRACTS, vol. 113, no. 7, 13. August 1990 (1990-08-13) Columbus, Ohio, US; abstract no. 59818, WALDMANN, H ET AL.: "Synthesis of 2-acetamido-2-deoxyglucosyl...." Seite 770; Spalte 2; XP002148061 & CARBOHYDR. RES., Bd. 196, Nr. 1, 1990, Seiten 75-93,

## Beschreibung

Die vorliegende Erfindung betrifft neue Alkoxysilan-funktronelle Piperazinonderivate, ein Verfahren zu ihrer Herstellung sowie ihre Verwendung als Additiv in Dichtstoffen, Klebstoffen, Lacken oder Beschichtungsmitteln.

Hydrolysierbare organofunktionelle Silane sind wichtige Hilfsstoffe bei der Formulierung von Dichtstoffen, Lacken oder Beschichtungsmitteln. Eine Übersicht zur Verwendung derartiger Verbindungen in der Lackindustrie findet sich beispielsweise in H. Kittel, Handbuch der Lacke und Beschichtungen, S. Hirzel Verlag Stuttgart, 2. Auflage, 1998. Speziell bei allen Systemen, die über eine Silanpolykondensation vernetzen, spielen aminofunktionelle Silane eine wichtige Rolle, sowohl als Haftvermittler als auch als Cokatalysator für die Aushärtung. Aminogruppen aufweisende Alkoxysilane werden z.B. beschrieben in J. Org. Chem. 36 (1971), S. 3120, DE-A 11 526 95, 12 71 712, 21 61 716, 24 08 480, 25 21 399, 27 49 316 oder US-A 2 832 754 2 971 864 oder 4 481 364

US-A 4,623,740 offenbart N,N'- und N,N',N'-substituierte Silylharnstoffe und ein Verfahren zu deren Herstellung. Der Lehre des Standes der Technik nach eignen sich N-substituierte Silylharnstoffe als Haftvermittler für die Beschichtung von Glasfasern.

Bei den aminofunktionellen Silanen ist es generell wichtig, dass die Verbindungen einerseits stark polare aminische Gruppen aufweisen, die eine gute Substrathaftung vermitteln. Andererseits dürfen die aminofunktionellen Silane aber keine zu hohe katalytische Aktivität aufweisen, damit sie auch in größeren Mengen anwendbar sind, was immer dann notwendig ist, wenn Haftung auf problematischen Untergründen verlangt wird. Bei Verwendung größerer Mengen an Aminosilanen des Standes der Technik kommt es oftmals infolge zu großer katalytischer Aktivität der Aminosilane zu Lagerstabilitätsproblemen.

Aufgabe der vorliegenden Erfindung war es daher, neue aminofunktionelle Silane bereitzustellen, die gute Haftung zu diversen Substraten vermitteln und auch in hoher Dosierung problemlos angewendet werden können. Diese Aufgabe wurde mit den erfindungsgemäß zur Verfügung gestellten Alkoxysilan-funktionellen Piperazinonderivaten gelöst.

Gegenstand der Erfindung sind Alkoxysilangruppen aufweisende Piperazinonderivate der allgemeinen Strukturformel (I) 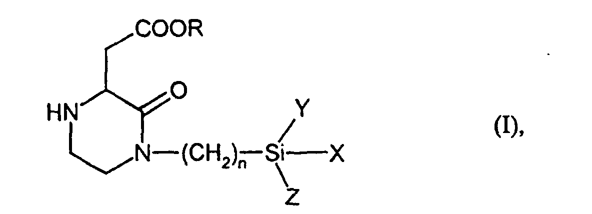 in welcher
- R: für einen linearen oder verzweigten Alkylrest mit bis zu 12 Kohlenstoffatomen steht,
- X, Y und Z: für gleiche oder verschiedene C₁-C₄-Alkyl- oder C₆-Arylreste stehen, mit der Maßgabe, dass mindestens einer dieser Reste für eine C₁-C₄-Alkoxygruppe steht und
- n: für die Zahl 2, 3 oder 4 steht.

Gegenstand der vorliegenden Erfindung ist auch ein Verfahren zur Herstellung von Alkoxysilan-funktionellen Piperazinonderivaten der Formel (I) 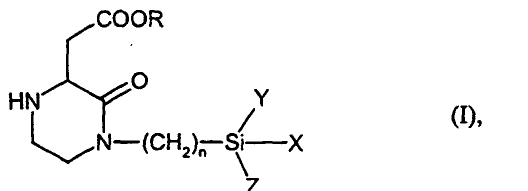 in welcher
- R: für einen linearen oder verzweigten Alkylrest mit bis zu 12 Kohlenstoffatomen steht,
- X, Y und Z: für gleiche oder verschiedene C₁-C₄-Alkyl- oder C₆-Arylreste stehen, mit der Maßgabe, dass mindestens einer dieser Reste für eine C₁-C₄-Alkoxygruppe steht und
- n: für die Zahl 2, 3 oder 4 steht,
dadurch gekennzeichnet, dass N-Aminoethyl-aminoalkylalkoxysilanen der allgemeinen Formel (II) 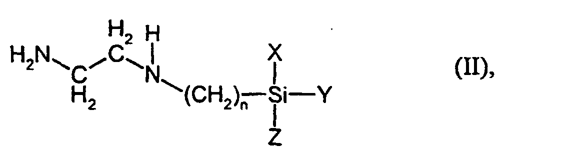 in welcher X, Y, Z und n die bei Formel (I) angegebene Bedeutung haben,
mit Malein- und/oder Fumarsäureestern der allgemeinen Formel (III)

ROOC-CH=CH-COOR' (III),

in welcher
- R und R': unabhängig voneinander für einen linearen oder verzweigten Alkylrest mit bis zu 12 Kohlenstoffatomen stehen,
umgesetzt werden.

In den vorstehend genannten Formeln steht n für die Zahl 2, 3 oder 4, vorzugsweise 3. X, Y und Z stehen unabhängig voneinander für Alkyl- oder Alkoxyreste mit 1 bis 4 Kohlenstoffatomen, mit der Maßgabe, dass mindestens einer der Reste für einen Alkoxyrest steht; vorzugsweise stehen alle Reste X, Y, Z für Methoxy- oder Ethoxyreste. R und R' stehen für gleiche oder verschiedene Alkylreste mit 1 bis 12 Kohlenstoffatomen, vorzugsweise gleiche Reste mit 1 bis 4 Kohlenstoffatomen.

Beispiele für geeignete N-Aminoethyl-aminoalkylalkoxysilane sind N-Aminoethyl-3-aminopropyl-trimethoxysilan, N-Aminoethyl-3-aminopropyl-triethoxysilan, N-Aminoethyl-3-aminopropyl-methyldimethoxysilan oder N-Aminoethyl-3-aminopropyl-methyldiethoxysilan.

Beispiele für geeignete Malein- oder Fumarsäureester sind Maleinsäuredimethylester, Maleinsäurediethylester, Maleinsäuredibutylester, Maleinsäuredioctylester, Maleinsäuredidodecylester sowie die entsprechenden Fumarsäureester. Maleinsäuredimethylester, Maleinsäurediethylester sowie Maleinsäuredibutylester sind bevorzugt einsetzbar.

Die Umsetzung der Malein- bzw. Fumarsäureester der Formel (III) mit den N-Ethylaminoalkylalkoxysilanen der Formel (II) erfolgt innerhalb eines Temperaturbereiches von 0 bis 140°C, vorzugsweise 40 bis 100°C, wobei die Mengenverhältnisse in der Regel so gewählt werden, dass die Ausgangsverbindungen im molaren Verhältnis von etwa 1:1 eingesetzt werden.

Bei der Umsetzung kommt es zunächst zu einer Addition der Malein- bzw. Fumarsäureester an die NH₂-Gruppe des Aminosilans im Sinne der DE-A 42 37 468, gefolgt von einer Cyclokondensationsreaktion zum Piperazinonderivat unter Abspaltung des Alkohols R-OH bzw. R'-OH.

Die Umsetzung kann in Substanz oder auch in Gegenwart von Lösemitteln wie z.B. Dioxan durchgeführt werden. Die Mitverwendung von Lösemitteln ist jedoch weniger bevorzugt. Selbstverständlich können auch Mischungen verschiedener N-Ethylaminoalkylalkoxysilanen mit Mischungen von Fumar- und/oder Maleinsäureestern umgesetzt werden.

Der bei der Cyclokondensationsreaktion entstehende Alkohol R-OH bzw. R'-OH wird in der Regel destillativ aus dem Reaktionsgemisch entfernt. Die erfindungsgemäßen Alkoxysilanfunktionellen Piperazinonderivate der Formel (I) sind farblose Flüssigkeiten, die nach Abdestillieren des Alkohols R-OH bzw. R'-OH in so hoher Reinheit anfallen, dass eine destillative Aufarbeitung in der Regel nicht notwendig ist.

Ein weiterer Gegenstand der Erfindung ist die Verwendung der erfindungsgemäßen Alkoxysilangruppen aufweisenden Piperazinonderivate der Formel (I) als Zusätze und/oder Additive zu Lacken, Beschichtungen, Klebstoffen und Dichtungsmassen, vorzugsweise solchen, die über eine Silanpolykondensation vernetzen.

Die erfindungsgemäßen Alkoxysilyl-funktionellen Piperazinonderivate sind wertvolle Additive für die Herstellung von Lacken, Beschichtungen, Dichtungsmaterialien sowie Klebstoffen. Aufgrund ihrer chemischen Struktur vermittels sie einerseits eine chemische Ankopplung an anorganische Füllstoffe und Pigmente über die Alkoxysilylgruppen, andererseits vermittelt der polare Piperazinonrest eine gute Haftung zu verschiedensten Untergründen wie Kunststoff, Metall, mineralischen Untergründen oder Holz. Insbesondere in Systemen die über eine Silanpolykondensation vernetzen wie beispielsweise Silikone oder Alkoxysilyl-funktionellen Polyurethane, sind die erfindungsgemäßen Alkoxysilyl-funktionellen Piperazinonderivate vorteilhaft einsetzbar. In diesen Systemen übernehmen die erfindungsgemäßen Verbindungen nicht nur die Rolle eines Haftvermittlers sondern besitzen auch eine besonders günstige katalytische Aktivität. In Systemen, die über eine Silanpolykondensation vernetzen, können vergleichsweise große Mengen der erfindungsgemäßen Verbindungen eingesetzt werden, ohne dass es zu Problemen bei der Lagerstabilität kommt.

### Beispiele

### Beispiel 1

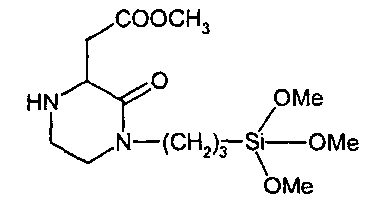

1 mol N-Aminoethyl-3-aminopropyltrimethoxysilan wird bei einer Temperatur von 50°C vorgelegt. Anschließend tropft man 1 mol Maleinsäuredimethylester unter Rühren zu, wobei die Temperatur auf 60°C ansteigt. Nach beendetem Zutropfen rührt man 10 Stunden bei 60°C nach und destilliert anschließend 1 mol Methanol unter leicht vermindertem Druck ab. Das Reaktionsprodukt ist eine blaßgelb gefärbte Flüssigkeit mit einer GC-Reinheit von 95 %. Im IR-Spektrum erscheint die Bande für die C=O-Schwingung des Piperazinonringes bei 1645 cm⁻¹. Die Bande für die C=O-Schwingung des Methylesterrestes erscheint bei 1735 cm⁻¹. Im Massenspektrum beobachtet man den Polekülpeak bei m/z = 334. Im 1H-NMR-Spektrum beobachtet man das Singulett für die Methoxyprotonen des Esterrestes bei 3,69 ppm, die Protonen der Trimethoxysilylgruppe geben Anlaß zu einem Singulett bei 3,56 ppm.

### Beispiel 2

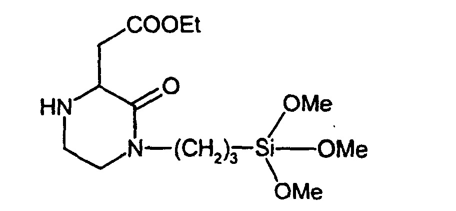

Man verfährt wie in Beispiel 1 beschrieben, jedoch wird anstelle des Maleinsäuredimethylesters Maleinsäurediethylester eingesetzt. Man destilliert 1 mol Ethanol bei vermindertem Druck ab. Das Reaktionsprodukt ist eine blaßgelb gefärbte Flüssigkeit mit einer GC-Reinheit von 92 %. Im IR-Spektrum erscheint die Bande für die C=O-Schwingung des Piperazinonringes bei 1650 cm⁻¹. Die Bande für die C=O-Schwingung des Ethylesterrestes erscheint bei 1740 cm⁻¹. Im Massenspektrum beobachtet man den Polekülpeak bei m/z = 348.

### Beispiel 3

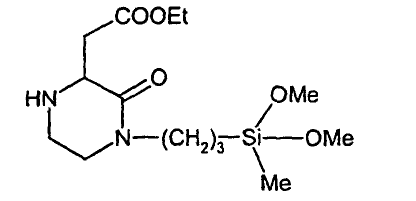

1 mol N-Aminoethyl-3-aminopropyl-methyl-dimethoxysilan wird bei einer Temperatur von 50°C vorgelegt. Anschließend tropft man 1 mol Maleinsäurediethylester unter Rühren zu, wobei die Temperatur auf 60°C ansteigt. Nach beendetem Zutropfen rührt man 10 Stunden bei 60°C nach und destilliert anschließend 1 mol Ethanol unter leicht vermindertem Druck ab. Das Reaktionsprodukt ist eine blaßgelb gefärbte Flüssigkeit mit einer GC-Reinheit von 93 %. Im IR-Spektrum erscheint die Bande für die C=O-Schwingung des Piperazinonringes bei 1640 cm⁻¹. Die Bande für die C=O-Schwingung des Ethylesterrestes erscheint bei 1728 cm⁻¹. Im Massenspektrum beobachtet man den Polekülpeak bei m/z = 332.

### Beispiel 4

### Herstellung eines Dichtstoffs auf Basis eines Alkoxysilyl-Endgruppen aufweisenden Polyurethans

2000 g eines Polyetherdiols der OH-Zahl 28, hergestellt durch Propoxylierung von Propylenglykol und anschließende Ethoxylierung des Propoxylierungsprodukts (PO/EO-Verhältnis = 80:20) werden mit 155,4 g Isophorondiisocyanat bei 70°C unter Zusatz von 0,02 g Dibutylzinndilaurat bis zum Erreichen des theoretischen NCO-Gehaltes von 0,78 % prepolymerisiert. Nach Abkühlen auf 60°C tropft man 140,4 g N-(3-Trimethoxysilylpropyl)asparaginsäure-diethylester (hergestellt gemäß EP-A 596 360, Bsp. 5) zügig zu und rührt, bis im IR-Spektrum keine Isocyanatbande mehr zu sehen ist. Das erhaltene Alkoxysilyl-Endgruppen aufweisende Polyurethanprepolymer hat eine Viskosität von 76000 mPas (23°C).

In einem handelsüblichen Plantenmischer werden die folgenden Komponenten zu einem gebrauchsfertigen Dichtstoff verarbeitet:
- 36,4 Gew.-Teile: Alkoxysilyl-Endgruppen aufweisendes Polyurethan
- 12,9 Gew.-Teile: Diisoundecylphthalat (Weichmacher)
- 0,02 Gew.-Teile: Dibutylzinn-bis-acetoacetonat (10 %ig gelöst in Solventnaphtha 100)
- 1,50 Gew.-Teile: Vinyltrimethoxysilan
- 46,2 Gew.-Teile: Fällungskreide (Typ: Socal U1S2)
- 1,40 Gew.-Teile: Disparlon® NVG8403 S (Thixotropiermittel der Kusumoto Chem. Ltd.)

Die Mischung wird 10 Minuten bei einem Druck von 100 mbar dispergiert, wobei die Innentemperatur auf 60°C ansteigt. Anschließend werden
- 3,0 Gew.-Teile: Akoxysilyl-funktionelles Piperazinonderivat aus Beispiel 1

zugegeben und bei einem Druck von 100 mbar durch 10-minütiges Rühren eingearbeitet. Der so hergestellte Dichtstoff zeigt eine ausgezeichnete Standfestigkeit, haftet auf nahezu allen Untergründen und härtet mit einer Hautbildungszeit von 30 Minuten aus.

Das Produkt wird in eine handelsübliche Kartusche abgefüllt und bei 50°C gelagert. Nach einer Lagerdauer von 90 Tagen lässt sich das Produkt noch problemlos verarbeiten und zeigt unveränderte Produkteigenschaften.

Die folgenden mechanischen Eigenschaften wurden bestimmt:

| | | |
|---|---|---|
| Zugfestigkeit: | 2,8 N/mm² | (DIN 53504) |
| Reißdehnung: | 315 % | (DIN 53504) |
| Weiterreißwiderstand: | 6,0 N/mm | (DIN 53515) |
| Shore A-Härte: | 40 | |

## Patentansprüche

1. Alkoxysilangruppen aufweisende Piperazinonderivate der allgemeinen Strukturformel (I) 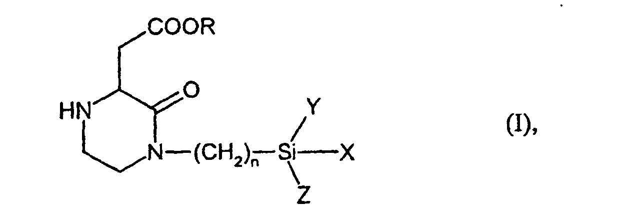 in welcher
R für einen linearen oder verzweigten Alkylrest mit bis zu 12 Kohlenstoffatomen steht,
X, Y und Z für gleiche oder verschiedene C₁-C₄-Alkyl- oder C₆-Arylreste stehen, mit der Maßgabe, dass mindestens einer dieser Reste für eine C₁-C₄-Alkoxygruppe steht und
n für die Zahl 2, 3 oder 4 steht.

2. Alkoxysilangruppen aufweisende Piperazinonderivate gemäß Anspruch 1, **dadurch gekennzeichnet, dass** X, Y und Z jeweils für Methoxyreste oder Ethoxyreste stehen.

3. Verfahren zur Herstellung Alkoxysilangruppen aufweisender Piperazinonderivate gemäß Anspruch 1, **dadurch gekennzeichnet, dass** man innerhalb eines Temperaturbereichs von 0°C bis 140°C etwa äquimolare Mengen N-Aminoethyl-aminoalkoxysilanen der allgemeinen Formel (II) 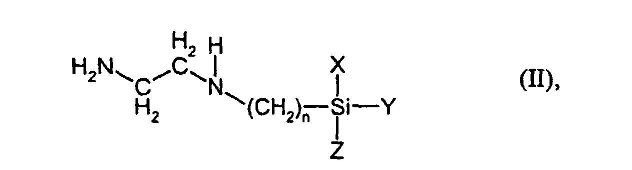 in welcher X, Y, Z und n die in Anspruch 1 bei Formel (I) angegebene Bedeutung haben,
mit Malein- und/oder Fumarsäureestern der allgemeinen Formel (III)
ROOC-CH=CH-COOR' (III),
in welcher
R und R' unabhängig voneinander für einen linearen oder verzweigten Alkylrest mit bis zu 12 Kohlenstoffatomen stehen, umsetzt.

4. Verwendung der Alkoxysilangruppen aufweisenden Piperazinonderivate gemäß Anspruch 1 als Additiv in Lacken, Beschichtungen, Klebstoffen und Dichtmassen.

5. Verwendung der Alkoxysilangruppen aufweisenden Piperazinonderivate gemäß Anspruch 1 als Additiv in Lacken, Beschichtungen, Klebstoffen und Dichtmassen, die über eine Silanpolykondensation vernetzen.

## Claims

1. Piperazinone derivatives containing alkoxysilane groups of the general structural formula (I) 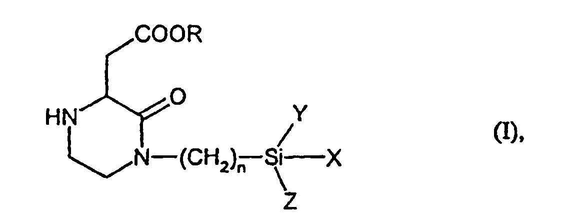 in which
R denotes a linear or branched alkyl radical with up to 12 carbon atoms,
X, Y and Z denote identical or different C₁-C₄ alkyl radicals or C₆ aryl radicals, with the proviso that at least one of these radicals denotes a C₁-C₄ alkoxy group, and
n denotes the number 2, 3 or 4.

2. Piperazinone derivatives containing alkoxysilane groups according to claim 1, **characterised in that** X, Y and Z in each case denote methoxy radicals or ethoxy radicals.

3. Process for the production of piperazinone derivatives containing alkoxysilane groups according to claim 1, **characterised in that** roughly equimolar amounts of N-aminoethyl-aminoalkoxysilanes of the general formula (II) 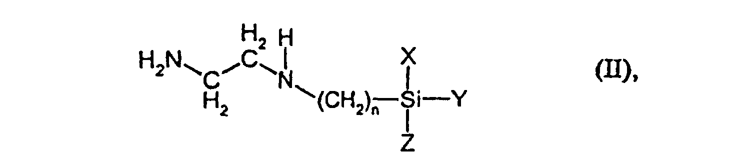 in which X, Y, Z and n have the meanings given in formula (I) in claim 1, are reacted in a temperature range from 0°C to 140°C
with maleic acid esters and/or fumaric acid esters of the general formula (III)
ROOC-CH=CH-COOR' (III),
in which
R and R' independently of one another denote a linear or branched alkyl radical with up to 12 carbon atoms.

4. Use of the piperazinone derivatives containing alkoxysilane groups according to claim 1 as additives in lacquers, coatings, adhesives and sealants.

5. Use of the piperazinone derivatives containing alkoxysilane groups according to claim 1 as additives in lacquers, coatings, adhesives and sealants that crosslink via a silane polycondensation.

## Revendications

1. Pipérazinones à groupes alcoxysilane répondant à la formule générale de structure 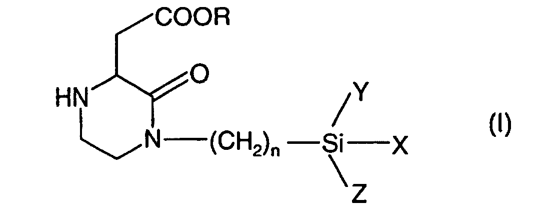 dans laquelle
R représente un groupe alkyle à chaîne droite ou ramifiée contenant jusqu'à 12 atomes de carbone,
X, Y et Z, ayant des significations identiques ou différentes, représentent chacun un groupe alkyle en C₁-C₄ ou un groupe aryle en C₆, mais l'un au moins de ces symboles représente un groupe alcoxy en C₁-C₄ et
n est égal à 2, 3 ou 4.

2. Pipérazinones à groupes alcoxysilane selon la revendication 1, **caractérisées en ce que** X, Y et Z représentent tous des groupes méthoxy ou éthoxy.

3. Procédé pour la préparation des pipérazinones à groupes alcoxysilane selon la revendication 1, **caractérisé en ce que** l'on fait réagir dans l'intervalle de température de 0 à 140°C des quantités à peu près équimoléculaires de N-aminoéthyl-aminoalcoxysilanes de formule générale (II) 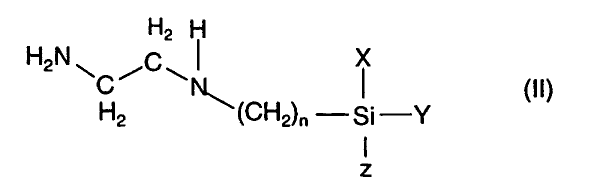 dans laquelle X, Y, Z et n ont les significations indiquées en référence à la formule (I) dans la revendication 1,
avec des esters maléiques et/ou fumariques de formule générale (III) Le A 33569 (00 949 179.6)
ROOC-CH=CH-COOR' (III)
dans laquelle
R et R' représentent chacun, indépendamment l'un de l'autre, un groupe alkyle à chaîne droite ou ramifiée contenant jusqu'à 12 atomes de carbone.

4. Utilisation des pipérazinones à groupes alcoxysilane selon la revendication 1 en tant qu'additifs à des vernis, des produits de revêtement, des colles et des masses d'étanchéité.

5. Utilisation des pipérazinones à groupes alcoxysilane selon la revendication 1 en tant qu'additifs à des vernis, des produits de revêtement, des colles et des masses d'étanchéité qui réticulent par une condensation de silane.
